# FASCICULE DE BREVET EUROPEEN

(11) **EP 1 421 564 B1**
(45) Date de publication et mention de la délivrance du brevet: **01.03.2006**
(21) Numéro de dépôt: 02748484.9
(22) Date de dépôt: 10.07.2002
(51) Int. Cl.: G07F 7/10, G06Q 10/00

(54) **DISPOSTIF DE PAIEMENT**
BEZAHLVORRICHTUNG
PAYMENT DEVICE

(30) Priorité: 13.07.2001 EP 01202693; 24.01.2002 EP 02100057
(43) Date de publication de la demande: 26.05.2004
(73) Titulaire: Maxcard Company SPRL, 1380 Lasne (BE); de Myttenaere, Yves, 1640 Rhode-Saint-Genèse (BE)
(72) Inventeur: DE MYTTENAERE, Yves, B-1640 Rhode-Saint-Genèse (BE)
(74) Mandataire: Quintelier, Claude
(86) Numéro de dépôt international: PCT/BE2002/000120
(87) Numéro de publication internationale: WO 2003/012751

(56) Documents cités:
- EP-A- 1 050 835
- WO-A-95/21428
- GB-A- 2 298 505
- US-A- 6 000 608

## Description

La présente invention se rapporte à un dispositif de paiement utilisant un système de carte à piste magnétique ou puce électronique. Le document GB-A- 2298505 décrit un mode de réalisation d'un tel dispositif de paiement.

Des cartes à piste magnétique ou puce électronique sont connues pour exercer diverses fonctions. Ainsi, certaines cartes assurent une fonction de moyen de crédit auprès de diverses institutions financières ou organismes de crédit, d'autres une fonction de moyen de débit de comptes du titulaire de ladite carte au sein de telles institutions. Un autre type de carte assume une fonction de moyen de fidélisation d'un client auprès d'une enseigne commerciale, permettant au titulaire de la carte d'accumuler des unités de valeur compensatoire au moyen desquelles il pourra acquérir des produits distribués par l'enseigne ou bénéficier de réductions sur ces produits ou encore de services promotionnels offerts par cette enseigne aux détenteurs d'unités de valeur compensatoire.

Des cartes à piste magnétique pouvant assurer simultanément différentes fonctions existent également. Ainsi, le brevet américain n° 6,000,608 décrit un système de carte à piste magnétique dans lequel une telle carte peut assurer les fonctions de carte de débit prépayée émise par une enseigne, carte téléphonique, carte de fidélité et carte d'information médicale. Un tel système comprend un terminal de lecture de cartes à piste magnétique relié à une unité de gestion d'une institution bancaire et à un centre de traitement. Le centre de traitement comprend ou est en liaison avec une base de données pour chaque fonction de la carte et gère l'utilisation par l'utilisateur de la carte de ces différentes fonctions. L'enseigne émettrice d'une carte de débit prépayée peut récompenser le porteur de ses achats par des unités de valeur compensatoire gérées par la base de donnée relative à la fonction carte de fidélité. L'enseigne émettrice peut aussi permettre que la carte émise soit également utilisée comme carte téléphonique, une instruction lors de l'utilisation de la carte permettant alors d'activer la base de données relative à la fonction carte de débit ou carte téléphonique au niveau du centre de traitement. Alternativement, une carte selon le système considéré peut assurer uniquement la fonction de carte de fidélité et non de carte de débit. Les unités de valeur compensatoire capitalisées par la base de donnée du centre de traitement relatif à la fonction en question peuvent alors être utilisées pour l'achat de produits de l'enseigne émettrice ou du fabriquant émetteur, dans ce dernier cas auprès de n'importe quelle enseigne distribuant ses produits, une fois que le nombre d'unités de valeur compensatoire capitalisées a atteint un seuil prédéterminé. Ces différentes fonctions peuvent être combinées.

Le système selon US 6,000,608 pose un problème de souplesse et de polyvalence. En effet, d'une part lorsque la fonction carte de débit est assurée, il est nécessaire que la carte soit prépayée et dès lors liée à un compte spécifique associé à l'enseigne ou au fabricant émetteur. L'utilisateur ne peut donc pas utiliser la carte décrite comme carte de débit ou de crédit traditionnelle pour effectuer des achats dans des points de vente non liés à l'enseigne ou au fabricant émetteur. D'autre part, il n'existe pas de possibilité pour l'utilisateur de la carte de déterminer lui-même à tout moment s'il désire faire des achats en monnaie ou en unités de valeur compensatoire capitalisées dans la base de données relative à la fonction carte de fidélité, car ces unités de valeur compensatoire ne sont utilisables qu'une fois un seuil déterminé atteint. Enfin, chaque carte émise par une enseigne ou un fabricant ne peut fonctionner que relativement aux produits de cette enseigne ou de ce fabricant. En particulier, les unités de valeur compensatoire capitalisées dans la base de donnée du centre de traitement relative à la fonction carte de fidélité, ne peuvent être utilisées qu'auprès de l'enseigne ou des distributeurs des produits du fabricant qui ont gratifié l'utilisateur de la carte desdites unités de valeur compensatoire.

La présente invention résout ces différents problèmes en proposant un dispositif de paiement utilisant un support de données, par exemple une carte à piste magnétique ou puce électronique, dans lequel une même carte peut être utilisée comme carte de débit et/ou de crédit traditionnelle ainsi que, ou alternativement, comme carte de fidélité, cette dernière fonction étant assurée de manière telle que des unités de valeur compensatoire capitalisées auprès d'une enseigne peuvent être utilisées selon un programme défini par cette dernière dans ses différents points de vente mais aussi, selon le même programme ou un programme différent, auprès d'autres enseignes ayant conclu des accords avec la première.

Dès lors, un dispositif de paiement selon l'invention comprend une unité d'entrée, agencée pour recevoir des premières données reprises sur un support et identifiant un utilisateur qui va procéder à un paiement pour un achat qu'il a effectué, l'unité d'entrée étant agencée pour être reliée à un premier terminal destiné à être placé dans un point de vente, ce premier terminal ayant une entrée de données destinée à recevoir des deuxièmes données concernant l'achat, le premier terminal étant agencé pour communiquer les premières et deuxièmes données à un second terminal destiné à être placé auprès d'une instance financière qui se chargera de régler le paiement pour le compte de l'utilisateur, le dispositif comportant en outre un troisième terminal destiné à être placé auprès d'une centrale de gestion de paiements, ledit troisième terminal étant agencé pour gérer la communication entre le premier et le second terminal, ce troisième terminal ayant une première unité de calcul agencée pour traiter des paiements en monnaie et une deuxième unité de calcul agencée pour traiter des paiements en valeur compensatoire à partir d'un crédit non-financier accumulé par l'utilisateur, l'unité d'entrée étant pourvue de moyens de sélection permettant d'indiquer soit un mode de paiement en monnaie soit un mode de paiement en valeur compensatoire et de produire un premier signal de commande si le mode de paiement en monnaie est sélectionné et un deuxième signal de commande si le mode valeur compensatoire est choisi, le troisième terminal étant également agencé pour recevoir le premier et deuxième signal de commande et pour exécuter le paiement sous contrôle du deuxième signal de commande et à transmettre les premières et deuxièmes données au second terminal sous contrôle du premier signal de commande.

Un tel dispositif présente plusieurs avantages. D'abord, il permet le paiement d'achats par une fonction de débit ou de crédit traditionnelle via n'importe quelle instance financière auprès de laquelle est placé un second terminal. Ainsi, à partir d'accords passés entre plusieurs institutions financières, de crédit ou de débit, un même support de premières données, par exemple une carte stockant ces données dans une piste magnétique ou une puce électronique, permet un paiement via le débit de différents comptes ouverts auprès de telles institutions financières ou via différentes sociétés de crédit (telles VISA, MCC...). Le client dispose donc au travers d'une même carte, de plusieurs possibilités de paiement et ce dans tous les points de vente acceptant ladite carte. D'autre part, l'unité d'entrée et le troisième terminal sont agencés pour permettre une sélection par l'utilisateur entre un paiement en monnaie et un paiement en unités de valeur compensatoire, sans que le nombre de celles-ci doive avoir atteint un seuil prédéterminé pour permettre ce type de paiement. De plus, en lieu et place d'unités de valeur compensatoire, les enseignes peuvent accorder des unités de crédit en monnaie à leurs clients dans un but de fidélisation, mises en compte et gérées par le dispositif selon l'invention d'après le programme que ces enseignes auront défini. Enfin, la deuxième unité de calcul agencée pour traiter des paiements en valeur compensatoire à partir d'un crédit non financier accumulé par l'utilisateur permet que ce crédit soit utilisé dans différentes enseignes selon des programmes, éventuellement de réciprocité, qu'elles auront élaborés. De tels programmes permettent en outre aux enseignes qui les conçoivent de gérer en commun des actions publicitaires destinées aux titulaires de cartes selon le dispositif constituant la présente l'invention.

De préférence, un dispositif de paiement selon l'invention est agencé de sorte que le troisième terminal comporte une entrée pour recevoir des troisièmes données relatives à la gestion des paiements en valeur compensatoire ainsi qu'une mémoire reliée à ladite entrée et agencée pour stocker les troisièmes données, cette mémoire étant reliée à la deuxième unité de calcul qui est agencée pour effectuer ladite gestion sur base des troisièmes données.

Cette configuration permet au dispositif de traiter des troisièmes données relatives aux programmes de fidélité élaborés par les différentes enseignes utilisant ledit dispositif. Ainsi, une fois l'utilisateur de la carte de même que l'enseigne auprès de laquelle il effectue un paiement sont identifiés sur base des premières données, le programme de fidélité qui échoit à l'utilisateur sera sélectionné et le nombre d'unités de valeur compensatoire auquel le paiement lui donne droit ou dont il peut disposer pour effectuer ce paiement sera mis à sa disposition. Selon les accords passés entre différentes enseignes, les programmes de fidélité pourront être reliés. La gestion centralisée des unités de valeur compensatoire acquis étant équivalente à celle d'un compte en banque, avec les mêmes procédures de sécurité, l'utilisateur de la carte ne peut donc pas perdre ses unités de valeur compensatoire.

Préférablement, la deuxième unité de calcul comporte un générateur d'unités de valeur compensatoire agencé pour produire sur base des premières et deuxièmes données un montant de crédit non-financier et le comptabiliser, ce générateur étant agencé pour être neutralisé sous contrôle du deuxième signal de commande.

La neutralisation du générateur de valeur compensatoire empêche que des unités de valeur compensatoire soient générées pendant que le troisième terminal effectue un paiement en telles unités et donc débite le compte en unités de valeur compensatoire dont dispose l'utilisateur de la carte auprès de l'enseigne à laquelle le paiement est destiné.

Selon un autre mode de réalisation de l'invention, les premières données comportent un premier champ agencé pour y inscrire une première identification identifiant un titulaire du support et un deuxième champ agencé pour y inscrire une deuxième identification identifiant un organisme avec lequel le titulaire est associé, lesdits moyens de sélection étant agencés pour lire lesdites premières données et pour présenter audit utilisateur un choix entre la première et deuxième identification ainsi que pour produire un troisième signal de commande indiquant le choix pour lequel l'utilisateur a opté.

De la sorte, un même porteur de carte pourra s'identifier en tant que personne privée ou en tant qu'employé/associé d'une société avec laquelle des enseignes ont conclu des accords de fidélisation spécifiques et/ou de sélection de lignes de produits/services dont l'achat, éventuellement plafonné à une certaine quantité ou à un certain montant, peut être effectué à partir d'un compte en monnaie ou unités de valeur compensatoire dont ladite société est titulaire. Le paiement sous une identification employé/associé de certains types de produits/services auprès d'enseignes qui utilisent le dispositif selon l'invention mais n'ont pas conclu d'accords de sélection de lignes de produits avec la société employant/associant l'utilisateur de la carte peut également être autorisé. En cas de conclusion des accords de sélection susmentionnés, si le paiement d'un produit/service non sélectionné est effectué au moyen du dispositif selon l'invention alors que l'identification en tant qu'employé/associé de la société ayant conclu ces accords a été choisie, ces paiements ne seront pas considérés par le troisième terminal comme professionnels mais comme effectués à titre privé. Selon l'identification sélectionnée par l'utilisateur et dans le cas de figure précédent modifié le cas échéant par le troisième terminal, celui-ci met en oeuvre un programme de fidélisation et/ou une ligne de débit/crédit spécifique. La possibilité de double identification privé/professionnel offerte par le dispositif selon l'invention permet une gestion aisée et maîtrisée des frais professionnels.

Afin de pouvoir générer un nombre d'unités de valeur compensatoire différent lors de la mise en oeuvre d'un programme de fidélité selon qu'un paiement est effectué auprès d'une enseigne en tant que personne privée ou en tant qu'employé/associé d'une société il est prévu selon un mode de réalisation préféré du dispositif de paiement selon l'invention, que le générateur de valeur compensatoire soit agencé pour recevoir le troisième signal de commande et pour produire le montant de crédit non-financier également sur base du troisième signal de commande.

De préférence, les premières données comportent un troisième champ agencé pour y inscrire une troisième identification identifiant au moins une instance financière, lesdits moyens de sélection étant agencés pour lire ladite troisième identification et pour présenter audit utilisateur un choix entre les instances financières reprises dans la troisième identification ainsi que pour communiquer le choix de l'instance financière au troisième terminal.

La présence d'un troisième champ dans les premières données offre l'avantage de permettre le recours à plusieurs institutions financières au moyen d'un même support de premières données.

Selon un autre mode préféré de réalisation du dispositif selon l'invention, le premier terminal comporte une unité d'affichage et un organe d'interrogation reliés entre eux, l'organe d'interrogation étant agencé pour interroger la deuxième unité de calcul sur le crédit non-financier associé aux premières données et transmettre ce crédit non-financier à l'unité d'affichage, agencée pour afficher ce dernier.

De la sorte, l'utilisateur de la carte de même qu'un préposé du point de vente de l'enseigne dans lequel ladite carte est utilisée, peuvent visualiser le crédit d'unités de valeur compensatoire dont dispose l'utilisateur, selon l'identification qu'il aura sélectionné, ce qui lui permet de décider d'effectuer un paiement en monnaie ou en unités de valeur compensatoire.

Les informations relatives à la gestion des comptes en unités de valeur compensatoire et/ou des lignes de crédit/débit utilisées pour effectuer des paiements au moyen du dispositif selon l'invention peuvent être conservées au sein du troisième terminal et archivées selon une fréquence prédéterminée (jours, semaines, mois...). Ces informations pourront servir notamment à l'établissement d'une facturation pour le compte d'une enseigne.

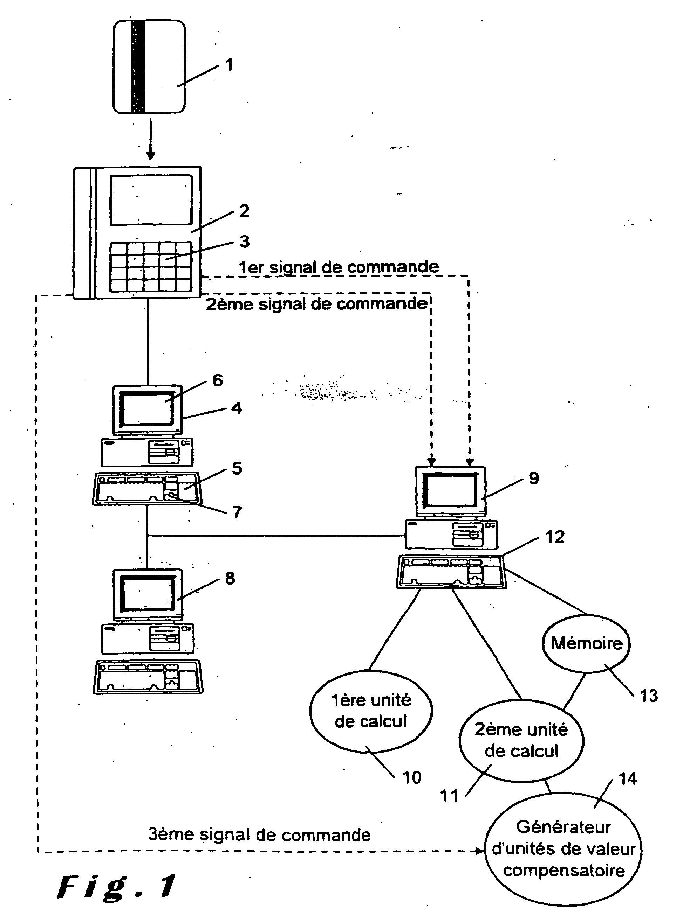

La figure 1 illustre à titre d'exemple non limitatif un dispositif selon l'invention, comprenant un support de premières données (1) consistant en une carte à piste magnétique, une unité d'entrée (2) pour recevoir les premières données, constituée d'un lecteur de carte à piste magnétique, ladite unité d'entrée comprenant des moyens de sélection (3) d'un mode de paiement en monnaie ou en unités de valeur compensatoire, consistant en un clavier. L'unité d'entrée (2) est reliée à un premier terminal (4) placé dans un point de vente, ledit terminal possédant une unité d'entrée (5), consistant en un clavier, de deuxièmes données relatives à l'achat effectué, telles son prix et la catégorie du service ou de l'article en question; le terminal (4) possédant également une unité d'affichage (6) des deuxièmes données, consistant en un écran. Le premier terminal (4) est agencé pour communiquer les premières et deuxièmes données à un second terminal (8) placé auprès d'une instance financière qui réglera le paiement pour le compte de l'utilisateur de la carte à piste magnétique. Le dispositif comprend un troisième terminal (9) placé auprès d'une centrale de gestion de paiements, ce terminal étant agencé pour régler la communication entre le premier (4) et le second (8) terminal. Ce troisième terminal (9) comprend une première unité de calcul (10) traitant les paiements en monnaie et une deuxième unité de calcul (11) pour traiter les paiements en unités de valeur compensatoire. Ledit troisième terminal (9) est également agencé pour recevoir un premier signal de commande envoyé par l'unité d'entrée (2) lorsqu'un paiement en monnaie est sélectionné et un deuxième signal de commande envoyé par l'unité d'entrée lorsqu'un paiement en unités de valeur compensatoire est sélectionné et exécuter le paiement sous contrôle du deuxième signal de commande ainsi que transmettre les premières et deuxièmes données au second terminal sous contrôle du premier signal de commande. Le troisième terminal (9) comporte en outre une entrée (12), un clavier, pour recevoir des troisièmes données relatives à la gestion des paiements en unités de valeur compensatoire ainsi qu'une mémoire (13) pour stocker les troisièmes données, reliée à ladite entrée (12) ainsi qu'à le deuxième unité de calcul (11) agencée pour effectuer ladite gestion sur base des troisièmes données. La deuxième unité de calcul (11) comprend un générateur d'unités de valeur compensatoire (14) pour produire sur base des premières et deuxièmes données un montant de crédit non financier et le comptabiliser, ce générateur pouvant être neutralisé sous contrôle du deuxième signal de commande. Le générateur d'unités de valeur compensatoire (14) est prévu pour recevoir un troisième signal de commande produit par les moyens de sélection (3) agencés pour présenter à l'utilisateur un choix entre une première identification du titulaire de la carte à piste magnétique et une deuxième identification d'un organisme avec lequel le titulaire est associé, ces identifications étant comprises dans lesdites premières données, le troisième signal de commande étant indicatif du choix en question. Le générateur d'unités de valeur compensatoire (14) produit le montant de crédit non financier également sur base du troisième signal de commande.

Différents modes de fonctionnement du dispositif selon l'invention vont à présent être décrits, à titre d'exemples non limitatifs, ainsi que le détail du traitement d'une transaction par le dispositif dans l'un des modes de fonctionnement décrits :

### Mode connecté direct

Dans ce mode de fonctionnement du dispositif selon l'invention, différentes unités d'entrées et premiers terminaux sont répartis dans les différents points de vente de l'enseigne utilisant le dispositif. Ces unités sont connectées à un troisième terminal situé dans un centre de traitement choisi par l'enseigne, via le réseau informatique de l'enseigne.
- Les premières données, relatives à l'identification du titulaire de la carte, éventuellement selon le choix personne privée ou employé/associé d'une société qu'il aura effectué grâce aux moyens de sélection prévus dans l'unité d'entrée contenues dans une piste magnétique ou une puce électronique portée par une carte adaptée au dispositif selon l'invention, sont lues par une unité d'entrée.
- Les données lues sont communiquées par un premier terminal au troisième terminal. L'identification de l'enseigne et du commerçant sont également communiquées de manière à pouvoir sélectionner les divers modes de paiement acceptés par l'enseigne ou le commerçant au travers de l'usage de la carte ainsi que le programme de fidélisation défini. Pourront notamment encore être communiquées au troisième terminal des données relatives au numéro de carte, à sa date d'expiration, aux codes des types d'articles composant la transaction, au crédit en unités de valeur compensatoire éventuellement octroyé in situ par le point de vente à l'utilisateur. Le montant total de la transaction est à son tour communiqué ainsi que le choix du paiement en monnaie ou en unités de valeur compensatoire et le cas échéant lors d'un paiement en monnaie, l'institution financière ou organisme de crédit sélectionné par l'utilisateur grâce aux moyens prévus à cet effet dans l'unité d'entrée.

Selon le programme de fidélisation défini par l'enseigne, le troisième terminal procède alors à la capitalisation tant privée que professionnelle des unités de valeur compensatoire accordées à l'utilisateur ainsi qu'à la déduction de telles unités du crédit dont il dispose si elles sont utilisées comme moyen de paiement.

Lorsque le paiement doit s'effectuer en monnaie par débit d'un compte bancaire, la demande d'autorisation de débit à la banque est anvoyée par le troisième terminal à la banque concernée ou à un centre de traitement de telles demandes agréé par ladite banque, qui répond au troisième terminal, lequel envoie cette réponse au point de vente afin d'autoriser ou de refuser le paiement. Lorsque le paiement doit s'effectuer via un organisme de crédit, le troisième terminal route la demande vers cet organisme ou un centre de traitement agréé ou encore la traite directement selon les règles appliquées par l'organisme de crédit ou un accord intervenu entre l'exploitant du troisième terminal et cet organisme.

Un exemple concret d'utilisation du dispositif selon l'invention dans le mode de fonctionnement décrit ci-dessus concerne un utilisateur disposant d'une identification en tant que personne privée aini qu'en tant qu'employé/associé d'une société qui l'autorise à effectuer des achats de repas/boissons de même que de carburant à titre professionnel dans certaines enseignes avec laquelle ladite société a conclu des accords, en utilisant pour effectuer le paiement de tels achats un compte dont cette société est titulaire. Lorsque l'utilisateur se servira d'une carte fonctionnant dans le dispositif selon l'invention auprès d'une des enseignes susmentionnées en vue d'acquérir par exemple du carburant, un repas et un magazine, le compte de la société sera débité du montant relatif au carburant et au repas mais non au magazine qui, n'étant pas repris dans les produits dont l'achat est autorisé à titre professionnel, ne pourra être acquis qu'à titre privé, par débit d'un compte privé de l'utilisateur, ou encore au moyen d'unités de valeur compensatoires qu'il aura acquises en tant que personne privée auprès de cette enseigne, selon le programme de fidélité qu'elle a élaboré, voire en tant qu'employé/associé de sa société, si celle-ci à permis l'utilisation des unités de valeurs compensatoires créditées lors d'achats professionnels pour effectuer des achats de type privé.

### Mode connecté sur appel, au travers de lignes téléphoniques, sur le troisième terminal.

Le traitement sera identique au mode connecté détaillé ci-dessus, hormis que chaque transaction nécessitera un appel au centre de traitement où se trouve le troisième terminal selon l'invention. La vitesse de la communication s'en trouvera dès lors réduite et ledit centre de traitement devra disposer de têtes de cascades suffisantes pour faire face au nombre d'appels qu'il recevra.

### Mode dégradé, avec traitement local de la transaction.

En cas de rupture de communication entre le point de vente et le troisième terminal, les transactions sont traitées en mode dit « dégradé », c'est à dire par application des règles définies au niveau du point de vente lui-même, selon les paramètres dont il disposera à cet instant. La consolidation avec l'ensemble des autres transactions interviendra dès que le point de vente sera à nouveau en mesure de fonctionner en mode connecté.

### Traitement d'une transaction en mode connecté direct :

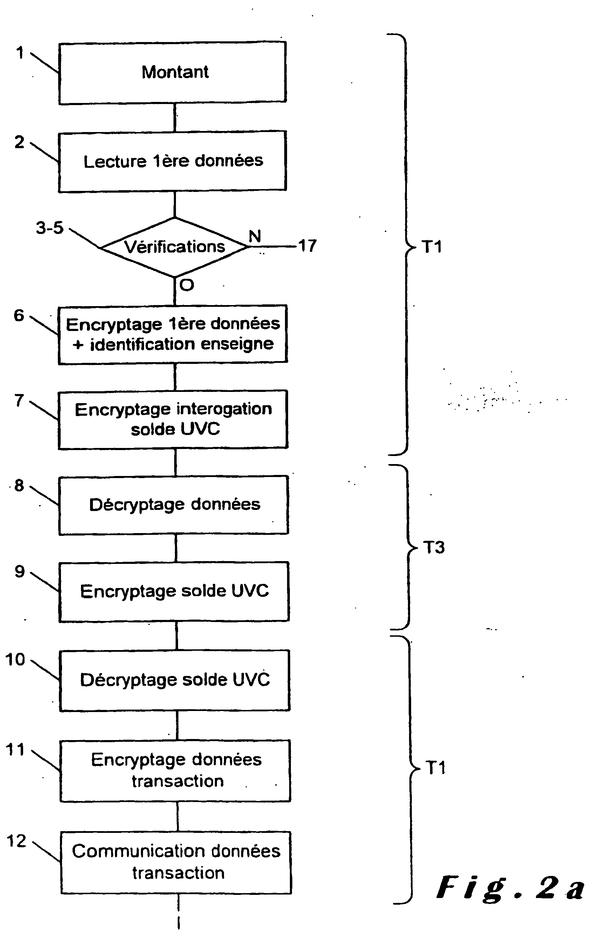

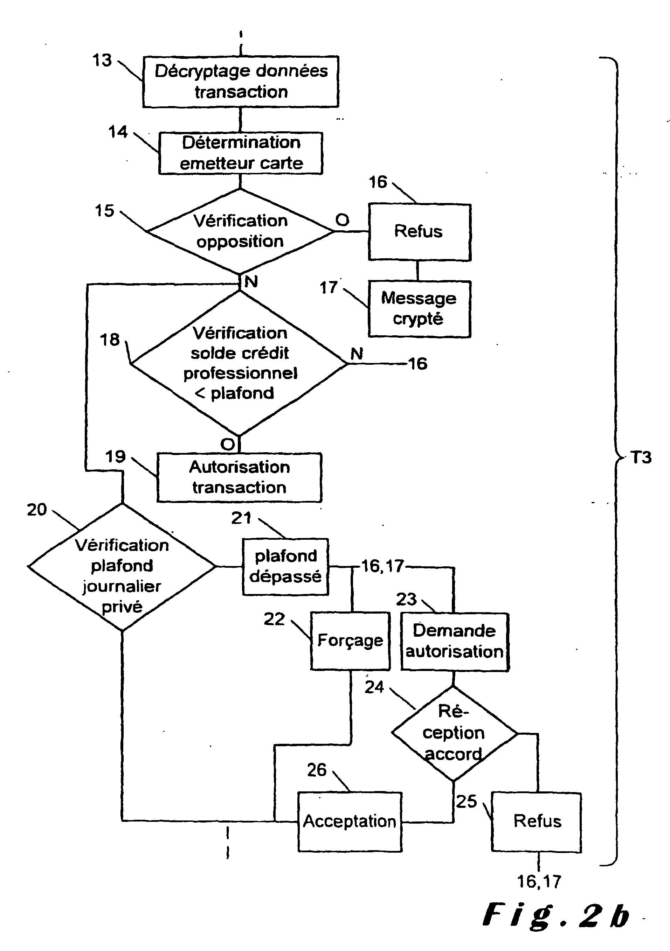

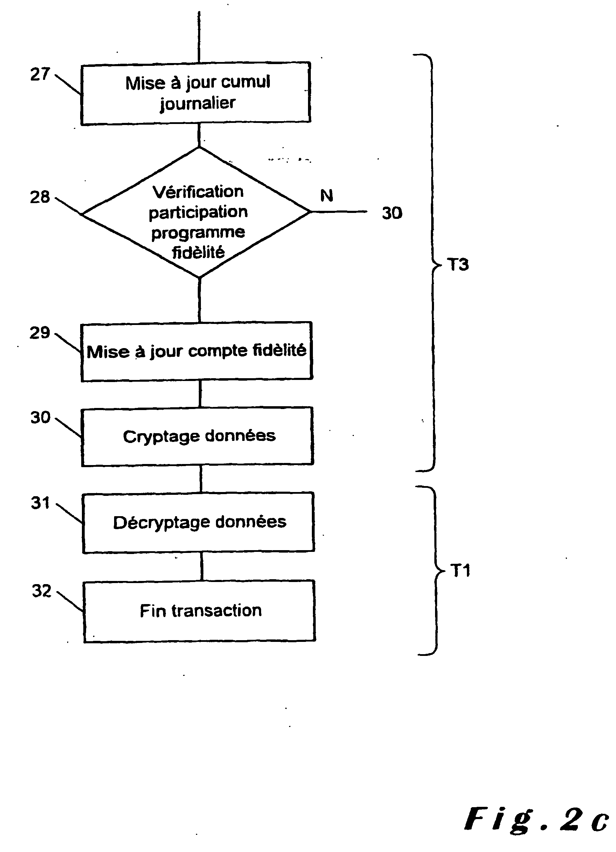

Les différentes tapes du traitement, dont la succession est illustrée par l'organigramme des figures 2a-2c, sont les suivantes :
1/ Communication du montant à payer au premier terminal via l'unité d'entrée.
2/ Lecture des premières données sur leur support porté par la carte de l'utilisateur par l'unité d'entrée.
3/ Vérification de la longueur du code d'identification de la carte lu, laquelle détermine s'il s'agit d'une carte nationale ou étrangère. Selon le cas, le plafond de somme autorisée pour effectuer un paiement sans vérification bancaire préalable du solde du compte à débiter est différent, aucun paiement ne pouvant le cas échéant être effectué sans vérification préalable en cas de carte étrangère. Dans cette dernière hypothèse →17
4/ Vérification sur base notamment du code d'identification de la carte si celle-ci n'est pas falsifiée. Dans ce cas →17
5/ Vérification de la date de validité de la carte. Si elle est dépassée →17
6/ Encryptage des premières données ainsi que de l'identification de l'enseigne du point de vente et le cas échéant de ce dernier.
7/ Introduction dans les données encryptées d'une interrogation du troisième terminal sur le solde du compte de l'utilisateur en unités de valeur compensatoire, le cas échéant selon l'identification dudit utilisateur en tant que personne privée ou employé/associé d'une société, afin que l'utilisateur puisse décider d'utiliser tout ou partie de ces unités pour effectuer tout ou partie du paiement. Il est à noter que le dispositif selon l'invention permet en cas de paiement via une unité d'entrée située à l'extérieur d'un point de vente (par exemple à proximité de pompes à carburant d'une station service), que ce paiement donne lieu à la génération immédiate des unités de valeur compensatoire auxquelles il donne droit, lesquelles peuvent être elles-mêmes utilisées pour effectuer ledit paiement.
8/ Décryptage par le troisième terminal des données qui lui ont été communiquées.
9/ Encryptage par le troisième terminal de la communication au point de vente du solde du compte de l'utilisateur en unités de valeur compensatoire.
10/ Décryptage par le premier terminal du solde des unités de valeur compensatoire disponibles comme mode de paiement au point de vente.
11/ Encryptage par le premier terminal des deuxièmes données relatives à la transaction, à savoir, numéro de la transaction, montant de la transaction, mode(s) de paiement utilisé(s), nombre d'unités de valeur compensatoire le cas échéant utilisées pour effectuer tout ou partie du paiement, lignes de produits/services composant la transaction, aux fins d'acceptation de l'achat à titre professionnel ou privé des produits/services concernés, selon les éventuels accords de sélection conclus entre l'enseigne dont dépend le point de vente et la société dont dépend en tant qu'employé/associé l'utilisateur, mode(s) de paiement utilisé(s).
12/ Communication des données cryptées relatives à la transaction au troisième terminal.
13/ Décryptage des données relatives à la transaction par le troisième terminal.
14/ Détermination par le troisième terminal de l'émetteur de la carte au moyen de la table des Bin.
15/ Vérification que la carte utilisée n'est pas reprise dans la liste d'opposition communiquée au troisième terminal par une institution financière ou un organisme de crédit auxquels la carte permet de recourir.
16/ En cas d'opposition, la transaction sera refusée.
17/ Si 16, un message de refus crypté est communiqué au point de vente par le troisième terminal.
18/ Si la transaction ne concerne que des produits/services acquis par l'utilisateur en tant qu'employé/associé d'une société, alors vérification du solde disponible de la ligne de débit/crédit professionnelle attribuée à l'utilisateur pour l'enseigne concernée et/ou de la ligne de débit/crédit accordée à la société pour ladite enseigne.
   Ainsi, le dispositif selon l'invention permet de gérer aisément les dépenses professionnelles effectuées par un/des employé(s)/associé(s) d'une société grâce à des accords conclus entre cette société et des enseignes distribuant des produits/services dont l'achat est autorisé à titre professionnel et à la définition pour chacune desdites enseignes d'une ligne de crédit pour ces dépenses professionnelles, soit individuelle pour un employé/associé déterminé soit collective pour l'ensemble des employés/associés de la société. En cas de dépassement de ce crédit, le paiement ne pourra plus être effectué par débit d'un compte dont la société est titulaire mais seulement d'un compte dont l'utilisateur est titulaire en tant que personne privée. La transmission au troisième terminal de l'identification du point de vente dépendant d'une enseigne avec laquelle de tels accords ont été conclus, permet également que les achats effectués auprès de ce point de vente par l'utilisateur puissent être automatiquement considérés comme professionnels.
19/ Si le montant de ladite transaction est inférieur audit solde disponible, autorisation délivrée par le troisième terminal et compte professionnel mis à jour.
20/ Si la transaction concerne des produits/services acquis par l'utilisateur en tant que personne privée, vérification par le troisième terminal du plafond journalier autorisé à un utilisateur pour effectuer un paiement sans autorisation préalable de l'institution financière ou organisme de crédit choisi, applicable au point de vente concerné, selon les accords intervenus entre ledit point de vente, l'enseigne et l'institution financière ou organisme de crédit en question. En effet, selon la localisation du point de vente et le type de produits/services qu'il propose, ce plafond pourra varier, compte tenu du risque de fraude relatif auxdites localisation et type de produits/services.
21/ En cas de montant supérieur audit plafond journalier, alors 16 et 17
22/ Suivant les accords, il sera toléré ou non, selon des règles à définir, d'accepter un forçage. Par exemple, un tel forçage peut être envisagé en cas de rupture des communications informatiques ou téléphoniques entre un point de vente et le troisième terminal.
23/ En cas de dépassement dudit plafond, ou lorsqu'aucun plafond n'a été défini, par exemple lorsque le paiement est effectué à l'étranger, demande d'autorisation de paiement à l'institution financière ou organisme de crédit choisi par l'utilisateur pour effectuer ledit paiement.
24/ Réception de l'accord de l'institution financière ou organisme de crédit susmentionnés.
25/ Si refus alors 16, 17
26/ Si acceptation alors
27/ mise a jour du cumul journalier de l'utilisateur par le troisième terminal.
28/ Vérification que le point de vente participe au programme de fidélité défini par son enseigne.
29/ Mise à jour du compte fidélité de la carte, selon le nombre d'unités de valeur compensatoire le cas échéant créditées et/ou débitées lors de la transaction, à savoir soit un compte commun aux enseignes partageant le même programme de fidélité, soit le compte de l'enseigne de laquelle relève le point de vente auprès duquel la transaction a été effectuée.
30/ Cryptage des données communiquées au point de vente, à savoir numéro de point de vente, numéro de la transaction, montant accordé a titre professionnel ou privé selon le cas d'application, numéro d'autorisation de paiement, nombre d'unités de valeur compensatoire dont le cas échéant l'utilisateur a été crédité ou débité durant la transaction, date et heure de la transaction.
31/ Décryptage desdites données par le premier terminal du pont de vente.
32/ Fin de la transaction pour le point de vente.

## Revendications

1. Dispositif de paiement, comprenant une unité d'entrée (2), agencée pour recevoir des premières données reprises sur un support (1) et identifiant un utilisateur qui va procéder à un paiement pour un achat qu'il a effectué, ladite unité d'entrée étant agencée pour être reliée à un premier terminal (4) destiné à être placé dans un point de vente, ledit premier terminal ayant une entrée (5) de données destinée à recevoir des deuxièmes données concernant ledit achat, ledit premier terminal étant agencé pour communiquer les premières et deuxièmes données à un second terminal (8) destiné à être placé auprès d'une instance financière qui se chargera de régler le paiement pour le compte dudit utilisateur, **caractérisé en ce qu'**il comporte un troisième terminal (9) destiné à être placé auprès d'une centrale de gestion de paiements, ledit troisième terminal (9) étant agencé pour gérer la communication entre le premier (4) et le second (8) terminal, ledit troisième terminal (9) ayant une première unité de calcul (10) agencée pour traiter des paiements en monnaie et une deuxième unité de calcul (11) agencée pour traiter des paiements en valeur compensatoire à partir d'un crédit non-financier accumulé par l'utilisateur, ladite unité d'entrée (2) étant pourvue de moyens de sélection (3) permettant d'indiquer soit un mode de paiement en monnaie soit un mode de paiement en valeur compensatoire et de produire un premier signal de commande si le mode de paiement en monnaie est sélectionné et un deuxième signal de commande si le mode valeur compensatoire est choisi, ledit troisième terminal (9) étant également agencé pour recevoir le premier et deuxième signal de commande et pour exécuter le paiement sous contrôle du deuxième signal de commande et à transmettre les premières et deuxièmes données au second terminal (8) sous contrôle du premier signal de commande.

2. Dispositif de paiement suivant la revendication 1, **caractérisé en ce que** ledit troisième terminal (9) comporte une entrée (12) pour recevoir des troisièmes données relatives au traitement des paiements en valeur compensatoire ainsi qu'une mémoire (13) reliée à ladite entrée (12) et agencée pour stocker les troisièmes données, ladite mémoire (13) étant reliée à ladite deuxième unité de calcul (11) qui est agencée pour effectuer ledit traitement sur base des troisièmes données.

3. Dispositif de paiement suivant la revendication 1 ou 2 **caractérisé en ce que** ladite deuxième unité de calcul (11) comporte un générateur de valeur compensatoire (14) agencé pour produire sur base des premières et deuxièmes données un montant de crédit non-financier et le comptabiliser, ledit générateur de valeur compensatoire étant agencé pour être neutralisé sous contrôle dudit deuxième signal de commande.

4. Dispositif de paiement suivant l'une des revendications 1 à 3, **caractérisé en ce que** lesdites premières données comportent un premier champ agencé pour y inscrire une première identification identifiant un titulaire du support et un deuxième champ agencé pour y inscrire une deuxième identification identifiant un organisme avec lequel le titulaire est associé, lesdits moyens de sélection (3) étant agencés pour lire lesdites premières données et pour présenter audit utilisateur un choix entre la première et deuxième identification ainsi que pour produire un troisième signal de commande indiquant le choix pour lequel l'utilisateur a opté.

5. Dispositif de paiement suivant les revendications 3 et 4, **caractérisé en ce que** ledit générateur de valeur compensatoire (14) est agencé pour recevoir ledit troisième signal de commande et pour produire ledit montant de crédit non-financier également sur base dudit troisième signal de commande.

6. Dispositif de paiement suivant l'une des revendications 1 à 5, **caractérisé en ce que** lesdites premières données comportent un troisième champ agencé pour y inscrire une troisième identification identifiant au moins une instance financière, lesdits moyens de sélection (3) étant agencés pour lire ladite troisième identification et pour présenter audit utilisateur un choix entre les instances financières reprises dans ladite troisième identification ainsi que pour communiquer le choix de l'instance financière audit troisième terminal (9).

7. Dispositif de paiement suivant l'une des revendications 1 à 6, **caractérisé en ce que** ledit premier terminal (4) comporte une unité d'affichage (6) et un organe d'interrogation (7) reliés entre eux, ledit organe d'interrogation (7) étant agencé pour interroger ladite deuxième unité de calcul (11) sur ledit crédit non-financier associé aux premières données et transmettre ledit crédit non-financier à l'unité d'affichage (6) qui est agencée pour afficher ledit crédit non-financier.

## Patentansprüche

1. Bezahlvorrichtung, die eine Eingabeeinheit (2) umfasst, die eingerichtet ist, um erste Daten zu empfangen, die auf einem Träger (1) übernommen werden und einen Benutzer identifizieren, der für einen Kauf, den er durchgeführt hat, eine Bezahlung vornehmen wird, wobei die Eingabeeinheit eingerichtet ist, um mit einem ersten Terminal (4) verbunden zu werden, das dazu bestimmt ist, an einem Verkaufsort aufgestellt zu werden, wobei das erste Terminal einen Dateneingang (5) hat, der dazu bestimmt ist, die zweiten Daten, die den Kauf betreffen, zu empfangen, wobei das erste Terminal eingerichtet ist, um die ersten und zweiten Daten an ein zweites Terminal (8) zu übertragen, das dazu bestimmt ist, bei einem Finanzinstitut aufgestellt zu werden, das die Begleichung der Bezahlung für Rechnung des Benutzers übernimmt, **dadurch gekennzeichnet, dass** sie ein drittes Terminal (9) umfasst, das dazu bestimmt ist, bei einer Zahlungsverwaltungszentrale aufgestellt zu werden, wobei das dritte Terminal (9) eingerichtet ist, um die Kommunikation zwischen dem ersten (4) und dem zweiten (8) Terminal zu verwalten, wobei das dritte Terminal (9) eine erste Recheneinheit (10) hat, die eingerichtet ist, um Barbezahlungen zu verarbeiten, und eine zweite Recheneinheit (11), die eingerichtet ist, um Bezahlungen in Ausgleichswert ausgehend von einem nicht finanziellen Kredit zu verarbeiten, der vom Benutzer angesammelt wird, wobei die Eingabeeinheit (2) mit Auswahlmitteln (3) versehen ist, die es erlauben, entweder einen Barbezahlungsmodus oder einen Bezahlungsmodus in Ausgleichwert anzugeben und ein erstes Steuersignal zu erzeugen, wenn der Barbezahlungsmodus ausgewählt ist, und ein zweites Steuersignal, wenn der Ausgleichswertmodus ausgewählt ist, wobei das dritte Terminal (9) auch eingerichtet ist, um das erste und das zweite Steuersignal zu empfangen und um die Bezahlung unter Kontrolle des zweiten Steuersignals auszuführen und die ersten und zweiten Daten an das zweite Terminal (8) unter der Kontrolle des ersten Steuersignals zu übertragen.

2. Bezahlvorrichtung nach Anspruch 1, **dadurch gekennzeichnet, dass** das dritte Terminal (9) einen Eingang (12) umfasst, um dritte Daten in Zusammenhang mit der Verarbeitung der Bezahlungen in Ausgleichswert zu empfangen sowie einen Speicher (13), der an den Eingang (12) angeschlossen und eingerichtet ist, um die dritten Daten zu speichern, wobei der Speicher (13) mit der zweiten Recheneinheit (11) verbunden ist, die eingerichtet ist, um die Verarbeitung auf der Grundlage der dritten Daten durchzuführen.

3. Bezahlvorrichtung nach Anspruch 1 oder 2, **dadurch gekennzeichnet, dass** die zweite Recheneinheit (11) einen Ausgleichswertgenerator (14) umfasst, der eingerichtet ist, um auf der Grundlage der ersten und zweiten Daten einen Betrag eines nicht finanziellen Kredits zu erzeugen und ihn zu verbuchen, wobei der Ausgleichswertsgenerator eingerichtet ist, um unter der Kontrolle des zweiten Steuersignals neutralisiert zu werden.

4. Bezahlvorrichtung nach einem der Ansprüche 1 bis 3, **dadurch gekennzeichnet, dass** die ersten Daten ein erstes Feld umfassen, das eingerichtet ist, um dort eine erste Identifikation einzutragen, die einen Inhaber des Trägers identifiziert, und ein zweites Feld, das eingerichtet ist, um dort eine zweite Identifikation einzutragen, die einen Organismus identifiziert, mit dem der Inhaber verbunden ist, wobei die Auswahlmittel (3) eingerichtet sind, um die ersten Daten zu lesen und dem Benutzer eine Auswahl zwischen der ersten und der zweiten Identifikation zu bieten und um ein drittes Steuersignal zu erzeugen, das anzeigt, für welche Auswahl sich der Benutzer entschieden hat.

5. Bezahlvorrichtung nach den Ansprüchen 3 und 4, **dadurch gekennzeichnet, dass** der Ausgleichswertgenerator (14) eingerichtet ist, um das dritte Steuersignal zu empfangen und um den Betrag des nicht finanziellen Kredits ebenfalls auf der Grundlage des dritten Steuersignals zu erzeugen.

6. Bezahlvorrichtung nach einem der Ansprüche 1 bis 5, **dadurch gekennzeichnet, dass** die ersten Daten ein drittes Feld umfassen, das eingerichtet ist, um dort eine dritte Identifikation einzutragen, die mindestens eine Finanzstelle identifiziert, wobei die Auswahlmittel (3) eingerichtet sind, um die dritte Identifikation zu lesen und um dem Benutzer eine Auswahl zwischen den Finanzstellen zu präsentieren, die in der dritten Identifikation übernommen werden, sowie um die Auswahl der Finanzstelle dem dritten Terminal (9) mitzuteilen.

7. Bezahlvorrichtung nach einem der Ansprüche 1 bis 6, **dadurch gekennzeichnet, dass** das erste Terminal (4) eine Anzeigeeinheit (6) und ein Abfrageelement (7) umfasst, die miteinander verbunden sind, wobei das Abfrageelement (7) eingerichtet ist, um die zweite Recheneinheit (11) über den nicht finanziellen Kredit zu befragen, der mit den ersten Daten verbunden ist, und den nicht finanziellen Kredit an die Anzeigeeinheit (6) zu übertragen, die eingerichtet ist, um den nicht finanziellen Kredit anzuzeigen.

## Claims

1. A payment device, comprising an input unit (2) arranged to receive first data taken from a medium (1) and identifying a user who will proceed with a payment for a purchase which he has made, said input unit being arranged to be connected to a first terminal (4) intended to be placed in a point of sale, said first terminal having a data input (5) intended to receive second data concerning said purchase, said first terminal being arranged to communicate the first and second data to a second terminal (8) intended to be placed with a financial body which will be responsible for making the payment on behalf of the user, said device being **characterised in that** it also comprises a third terminal (9) intended to be placed at a payment management center, said third terminal (9) being arranged to manage the communication between the first (4) and second (8) terminals, said third terminal (9) having a first calculation unit (10) arranged to process payments in cash and a second calculation unit (11) arranged to process payments in compensatory value from a non-financial credit accumulated by the user, said input unit (2) being provided with selection means (3) for indicating either a payment mode in cash or a payment mode in compensatory value and to produce a first control signal if the payment mode in cash is selected and a second control signal if the compensatory value mode is chosen, said third terminal (9) also being arranged to receive the first and second control signals and to execute the payment under the control of the second control signal and to transmit the first and second data to the second terminal (8) under the control of the first control signal.

2. A payment device as claimed in claim 1, **characterised in that** said third terminal (9) comprises an input (12) for receiving third data relating to the management of the payments in compensatory value and a memory (13) linked to said input (12) and arranged to store the third data, said memory (13) being connected to said second calculation unit (11) which is arranged to perform said processing on the basis of the third data.

3. A payment device as claimed in claim 1 or 2, **characterised in that** said second calculation unit (11) comprises a generator for units of compensatory value (14) arranged to produce on the basis of the first and second data a non-financial credit amount and to account for it, said generator of compensatory value being arranged to be neutralized under the control of said second control signal.

4. A payment device as claimed in one of claims 1 to 3, **characterised in that** said first data comprise a first field arranged so as to enter therein a first identification identifying an owner of the medium and a second field arranged to enter therein a second identification identifying a body with which the owner is associated, said selection means (3) being arranged to read said first data and to present to said user a choice between the first and second identification as well as to produce a third control signal indicating the choice for which the user has opted.

5. A payment device as claimed in claims 3 and 4, **characterised in that** said compensatory value generator (14) is arranged to receive said third control signal and to produce said non-financial credit amount also on the basis of said third control signal.

6. A payment device as claimed in one of claims 1 to 5, **characterised in that** said first data comprise a third field arranged to enter therein a third identification identifying at least one financial body, said selection means (3) being arranged to read said third identification and to present to said user a choice between the financial bodies included in said third identification and to communicate the choice of the financial body to said third terminal (9).

7. A payment device as claimed in one of claims 1 to 6, **characterised in that** said first terminal (4) comprises a display unit (6) and an interrogation device (7) connected together, said interrogation device (7) being arranged to interrogate said second calculation unit (11) on said non-financial credit associated with the first data and to transmit this non-financial credit to the display unit (6) which is arranged to display said non-financial credit.
